# EUROPEAN PATENT APPLICATION

(11) **EP 2 384 916 A1**
(43) Date of publication of application: **09.11.2011**
(21) Application number: 10004696.0
(22) Date of filing: 04.05.2010
(51) Int. Cl.: B60H 1/00, B60H 1/32

(54) **Transport cooling system**

(71) Applicant: Linde AG, 80331 München (DE)
(72) Inventor: Handley, Simon James, Old Hutton (GB); King, Brian, Surrey GU7 3EA (GB); Lamey, Ross, Cheshire CW11 1WW (GB)

(57) **Abstract**

The invention relates to a transport vehicle comprising a container (1) including a load space (2) for goods, a cryogen tank (4) for storing a cryogenic fluid, a heat exchanger (3), wherein said heat exchanger (3) is in communication with said cryogen tank (4) and with said load space (2), wherein said container (1) comprises a duct (7) extending over at least half of the length of said container (1) and wherein said heat exchanger (3) is in communication with said duct (7) (figure).

## Description

The invention relates to a transport vehicle comprising a container including a load space for goods, a cryogen tank for storing a cryogenic fluid, a heat exchanger, wherein said heat exchanger is in communication with said cryogen tank and with said load space.

Transport vehicles for transporting perishable food products are often provided with a cryogenic refrigeration system for cooling the food during transport. In such a conventional cryogenic refrigeration system liquid nitrogen is evaporated in a heat exchanger. The evaporation heat is withdrawn from air which as a result is cooled down. The cold air is then blown into the load space where the food is stored. Such a refrigeration system is, for example, disclosed in DE 10 2006 046 931 A1.

The cold air is circulated into the load space by means of mover fans. At the front where the heat exchanger is installed and where the cold air enters the load space there is maximum cold available to cool the food products. As the cold air moves through the load space the air becomes warmer. However, the air circulation within the load space and the temperature distribution cannot be controlled.

It is an object of the invention to provide a transport vehicle for perishable food products which allows better control of the air circulation and the temperature distribution in the load space.

This object is achieved by a transport vehicle comprising a container including a load space for goods, a cryogen tank for storing a cryogenic fluid, a heat exchanger, wherein said heat exchanger is in communication with said cryogen tank and with said load space, wherein said transport vehicle is characterized in that said container comprises a duct extending over at least half of the length of said container and wherein said heat exchanger is in communication with said duct.

The inventive transport vehicle comprises a container with a load space where the goods are stored during transport. The container is preferably thermally insulated. The container comprises a load space for goods which shall be transported or stored. The load space may either be the interior of the container or a part of the interior of the container or a separate enclosure within the container.

The vehicle is further provided with a cryogen tank for storage of a cryogenic fluid, in particular for storage of a cryogenic liquid, preferably for liquid nitrogen. The cryogen tank could be mounted vertically higher than the heat exchanger, for example on top of the vehicle cab, so that the cryogenic fluid flows by gravity from the cryogenic tank to the heat exchanger. But it is also possible to dispose the cryogenic tank at a lower level than the heat exchanger. For example, the cryogenic tank can be mounted below the container. In that case a pump can be used to bring the cryogenic fluid from the cryogenic tank to the heat exchanger.

The inventive vehicle further comprises a heat exchanger which is in communication with the cryogenic tank. That means, the heat exchanger and the cryogenic tank are connected with each other by pipes such that cryogenic fluid can be passed from the cryogenic tank through the pipes to the heat exchanger. By means of the heat exchanger air is cooled down in heat exchange, preferably in indirect heat exchange, with the cold cryogenic fluid. Thereby, the cryogenic fluid is warmed up and could be evaporated or remain in the liquid state.

The heat exchanger is in communication with the load space of the container. That means, there is a flow connection between the heat exchanger and the load space such that air which has been cooled down in the heat exchanger by heat exchange with the cryogenic fluid flows from the heat exchanger into the load space.

The heat exchanger is either disposed within the container or outside the container. In any case the heat exchanger is positioned so close to the load space that air which has been cooled down in the heat exchanger can be passed into the load space without essentially warming up before entering the load space. For that reason, the heat exchanger is preferably located within the container. This has the advantage that the distance between the heat exchanger and the load space is short and that the heat input into the cold air is minimised, which is in particular true when the container is thermally insulated.

Preferably the heat exchanger is positioned close to the front end of the load space wherein the terms "front end" and "rear end" relate to the direction of travel of the vehicle. At the front of the load space where the heat exchanger is installed maximum cold is available to cool the goods. Therefore, preferably frozen products are placed at this point. As the cold air moves down the duct the air becomes warmer. So the middle portion of the load space - in the longitudinal direction of the vehicle - is preferably used for transporting goods which require less cooling, for example chilled food products. At the downstream end or rear end of the duct the cold air has lost most of its coolness and for example fresh food products can be transported in this segment of the load space.

According to the invention, not all of the cold air is directly blown into the load space. At least a part of the cold air is first introduced into a duct which extends over at least half of the length of said container. According to preferred embodiments the duct extends over at least 70%, at least 80%, or at least 90% of the length of said container. The term "length of the container" shall mean its extension in the longitudinal direction of the vehicle. By means of the duct the cold air can be distributed along the length of the load space in a controlled manner.

The width of the duct, that is its extension in a horizontal direction perpendicular to its length, preferably extends over the whole width of the load space.

It is also possible to install two or more ducts which are all in communication with the heat exchanger. Further, even if it is preferred to extend the duct parallel to the longitudinal axis of the container or the vehicle it is possible to arrange the duct at another angle, for example diagonal through the container. The duct may also constitute of a main duct and sub-ducts branching off from the main duct.

The duct is preferably positioned in the upper part of the container. Preferably the duct is placed as high as possible in the container.

During its passage through the duct the air can be warmed up by heat input from the surroundings, for example from the goods stored in the load space. Therefore, it can be advantageous to insulate the duct in order to bring very cold air with a temperature close to the temperature level of the air leaving the heat exchanger to all parts of the load space. This can especially be advantageous for transport of frozen goods which require very low temperatures, for example below -15 °C or - 18°C.

Often it is desired to carry goods with different temperature requirements at the same time, for example frozen goods and fresh products. A temperature increase of the air passing through the duct is no disadvantage because the fresh products require a higher temperature anyway, for example a temperature range between 0 °C and +5 °C. In that case it is preferred to not insulate the duct and to allow at least to some degree heat input to the cold air.

A portion of the cold air from the heat exchanger is preferably blown directly into the load space in order to achieve temperatures as low as -15 °C or below. According to preferred embodiments of the invention more than 50% or more than 70% or more than 80% of the cold air leaving the heat exchanger is passed into the duct, the remainder being blown directly into the load space. According to another embodiment all of the air which has been cooled down by the heat exchanger is introduced into the duct.

The ratio of cold air blown directly into the load space to cold air entering the duct is preferably controlled by a PLC (programmable logic controller) via temperature sensors. The PLC activates a baffle system, preferably a pneumatic baffle system, mounted at the heat exchanger to control the amount of cold air required entering the duct.

The duct can not only be used to transfer cold air from the heat exchanger to one specific part of the load space which is at a certain distance from the heat exchanger. According to a preferred embodiment the duct also allows to distribute the cold air to several points. For that reason the duct comprises ports towards said load space. The term port shall include any kind of opening which is intended to let air move from the duct into the load space. The cold air enters the duct and then flows through the duct. During its passage through the duct a portion of the cold air leaves the duct through one of the ports and enters the load space. Thereby, specific sections of the load space can be subjected to cold air in a controlled manner.

It is preferred to provide the duct with adjustable ports. Adjustable shall mean that the size of the port or its degree of opening can be changed and preferably be controlled. For example, a particular port can be fully opened, half-opened or be completely closed. By opening or closing the port the flow of cold air through this port into the load space can be adjusted. Thus, the gas flow into the load space and the gas circulation within the load space can be controlled.

Preferably, the ports can be adjusted independent of each other. That is, opening or closing one port has no influence on the degree of opening of one of the other ports. It is also possible to adjust some of the ports interdependently. By adjusting the ports the air flow into the load space and thereby the input of cold into the load space can be manipulated.

The required cold depends on the kind of goods which shall be transported. In some cases it is necessary to transfer more cold air through the duct than in other cases. Furthermore, it might be necessary to control the amounts of cold air passed through different parts of the duct. Therefore, it is preferred to provide the interior of the duct with one or more baffles, preferably with adjustable baffles, by which the flow of air through the duct can be influenced, especially can be reduced. The air flow downstream of the baffle will be lower than the air flow upstream the baffle. By controlling the size and/or orientation of the baffle(s) the air flow through the duct and hence the air flow into the load space and the temperature distribution in the load space can be manipulated or even be controlled.

It is also possible to provide the duct with one or more shutters which can be opened or closed. By closing such a shutter the duct is separated into two sub-ducts. Cold air from the heat exchanger which has entered the first sub-duct cannot flow into the second sub-duct. The second sub-duct could then be used, for example, for providing warm air to the load space if the goods in that part of the load space shall be transported under ambient conditions.

It is also an advantage to provide a heater in communication with the duct. The heater may either be located in the duct or close to the duct such that air heated up by the heater can be transferred into the duct. In that way warm air can be distributed in the load space via the duct and the ports. For example, when in the load space some goods shall be stored under ambient temperatures and some other goods at cold conditions, for example 0 °C or less, the cold air from the heat exchanger is distributed via the duct to the goods which shall be cooled and warm air from the heater is passed to the goods which shall be stored under ambient temperatures.

The transport of the air through the duct is preferably achieved by means of a fan, preferably an electric fan. The fan is preferably positioned in the duct but can also be located outside the duct as long as it creates a sufficient flow to force the air through the duct. Furthermore, fans can be provided in one or more of the ports in order to enhance the transfer of air from the duct into the load space and to improve the air circulation within the load space.

Furthermore, it can be useful to install one or more additional fans in the load space in order to improve the air circulation.

As described above the distribution of cold air in the load space and thus the temperature distribution depend on the size and orientation of the ports towards the load space and on the size and orientation of the baffles or shutters in the duct. In a preferred embodiment the load space is provided with temperature sensors. The temperature sensors are in communication with a control unit which allows to adjust the ports and/or baffles and/or shutters and/or the heater depending on the measured temperature values.

For example, a not insulated duct comprises four ports to introduce cold air from the duct into the load space. During its passage through the duct the air is warmed up by heat input from the surroundings, for example from the goods stored in the load space. The ports, baffles, shutters and/or heaters are controlled such that the air entering the load space through the four ports has a temperature of -10°C, -5°C, 0°C and +5°C, respectively.

The inventive vehicle is preferably useful for transporting food stuff or food products, for example frozen food, chilled food, and/or fresh food. The vehicle could be a normal truck with a fixed container or a truck with an articulated trailer comprising the container for the goods.

The invention has several advantages compared to the prior art technology. By using the duct for distributing the air larger load spaces, for example in long trucks or trailers, can be used because the cold air can be distributed to parts of the load space which are far apart from the heat exchanger.

Preferably the temperature in the whole load space or in one or more parts of the load space is set by the requirements of the products or goods which shall be carried. Preferred temperature ranges are

| | |
|---|---|
| -15°C to -18°C | for frozen goods, |
| +0°C to +5°C | for chilled products, |
| +5°C to +10°C | for fresh products, |
| +15°C to +21 °C | for products to be stored at ambient temperatures, |

The temperature distribution and air circulation can be changed by controlling the degree of opening of the ports, the setting of the baffles and/or shutters, the power of the fan, and/or the power of the heater. The same vehicle can be used to carry different products which require different temperature conditions. For example, a particular vehicle is first used for transport of fresh food products, such as fruits or vegetables and subsequently used for carrying frozen products which require temperatures far below 0 °C. Compared to the prior art the flexibility of the transport vehicle is essentially increased.

The invention further allows to create different temperature zones in one load space. Therefore, the invention allows the transport of frozen, chilled and fresh products at the same time. By properly opening and closing the ports in the duct and properly setting the baffles it is possible to create different temperature zones in the load space, for example a first zone with a temperature between -20°C and -10 °C, a second zone with a temperature between -10°C and 0°C, and a third zone with a temperature between 0°C and +5°C.

The air circulation within the load space and the air flow in the duct are preferably controlled by using a system of sensors and controllers. The sensors can be located in the load space and/or in the duct. The baffles, shutters, ports, fans, and/or heaters can be PLC (programmable logic controller) controlled by using data from the sensors.

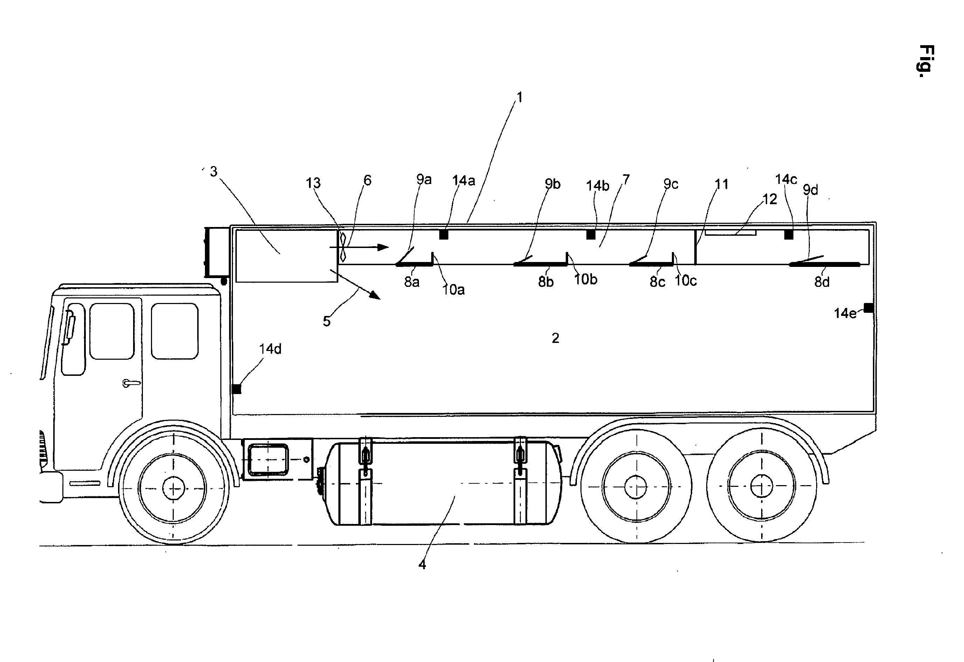

The invention as well as preferred embodiments of the invention will be described with reference to the accompanying drawing, in which
the figure shows an inventive vehicle for transport of perishable food products.

The figure shows a truck for transport of food which has to be cooled during transport. The truck comprises a container 1 with a load space 2 for the goods which shall be transported. The invention as described in the following is not limited to a truck. In particular, the inventive vehicle can also be a trailer or an an articulated truck.

A heat exchanger 3 is positioned In the upper front corner of the container 1, that is adjacent to the front wall of the container 1 and adjacent to the ceiling of the container 1. The heat exchanger 3 is connected to a storage tank 4 with liquid nitrogen by pipes (not shown in the figure). The storage tank 4 is positioned below the container 1. Liquid nitrogen can be pumped from the storage tank 4 through the pipes to heat exchanger 3. In heat exchanger 3 the liquid nitrogen is brought into indirect heat exchange with air whereby the nitrogen is evaporated and the air is cooled down to a temperature of - 15°C to -25 °C.

Between 30 % and 80% of the cold air is directly blown into the load space 2 of the container 1 (see arrow 5). The air flow 5 enters the load space 2 with a temperature of approximately -15°C. The remainder 6 of the air which has been cooled down in heat exchanger 3 is passed into a duct 7. The duct 7 is located in the upper part of the container 1 and extends from the heat exchanger 3 over the entire length of the container 1. The duct 7 has a rectangular cross section, but it is also possible to use a duct 7 with another cross section, for example a circular cross section.

The duct 7 comprises four ports 8a, 8b, 8c, 8d distributed along the length of the duct 7. The ports 8a, 8b, 8c, 8d may be but need not be uniformly distributed along the length of the duct 7. In the figure the ports 8a, 8b, 8c, 8d are of different size but it is also possible to provide the duct 7 with ports which all have the same size.

The ports 8a, 8b, 8c, 8d are adjustable. That means the degree of opening of each port 8a, 8b, 8c, 8d can be changed. Preferably, the degree of opening of each port 8a, 8b, 8c, 8d can be separately adjusted. For example, port 8a can be completely opened whereas one or more of the ports 8b, 8c, 8d are closed or only partly opened. By adjusting the opening of the ports 8a, 8b, 8c, 8d the respective flow of air from the duct 7 into the load space 2 can be controlled.

Each port 8a, 8b, 8c, 8d is provided with one or two baffles 9a, 9b, 9c, 9d, 10a, 10b, 10c. It is also possible to have additional baffles elsewhere in the duct 7 (not shown in the figure). The baffles 9a, 9b, 9c, 9d, 10a, 10b, 10c are preferably adjustable, too. In particular, the angle between a baffle 9a, 9b, 9c, 9d, 10a, 10b, 10c and the vertical is adjustable. Thereby, the air flow through the duct 7 and the air flow through the ports 8a, 8b, 8c, 8d can be influenced. By properly setting one or more of the baffles 9a, 9b, 9c, 9d, 10a, 10b, 10c a pre-determined fraction of the air flowing through the duct 7 can be directed through a specific port 8a, 8b, 8c, 8d.

The rear part of the duct 7 can be separated from the front part of the duct 7 by a shutter 11. The shutter 11 can be fully opened, completely closed or partly opened. Downstream of shutter 11 an electric heater 12 is provided. By means of heater 12 air can be warmed up and blown through port 8c into the load space 2. Heater 12 can be used to provide warm air to the load space 2 when, for example, products shall be transported under ambient temperature conditions.

The cold air is preferably forced into and through the duct 7 by an electric fan 13. Additional fans (not shown in the figure) may be positioned in or close to the ports 8a, 8b, 8c, 8d. These additional fans force the air from the duct 7 into the load space 2 and further improve the air circulation in the duct 7 and in the load space 2.

Within the duct 7 as well as in the load space 2 temperature sensors 14a, 14b, 14c, 14d, 14e are provided in order to monitor the local temperatures and to control the baffles 9a, 9b, 9c, 9d, 10a, 10b, 10c, ports 8a, 8b, 8c and shutters 11. Furthermore, the heater 12, fan 13 as well as the additional fans in the ports 8a, 8b, 8c, and / or the pump pumping liquid nitrogen to heat exchanger 3 can be controlled depending on the measured temperature values. The temperature sensors 14a, 14b, 14c, 14d, 14e are uniformly distributed over the duct 7 and/or the load space 2. The temperature sensors 14a, 14b, 14c, 14d, 14e are preferably provided at different heights within the load space 2.

### Example:

The transport vehicle shown in the figure can be used to transport frozen food products, chilled food products and fresh fruits and vegetables at the same time. A considerable fraction 5, for example 30% to 50 % of the air which has been cooled down in indirect heat exchange with the cryogenic nitrogen is directly blown into the front portion of load space 2. The air 5 blown into the load space 2 has a temperature of -15°C or even lower. Thus, the maximum of cold is introduced into front third of the load space 2 or the front part of the container 1. Therefore, at this point the frozen products are placed.

By means of temperature sensors 14a, 14d the temperatures in that front part of the load space 2 and in the upstream part of duct 7 are continuously measured. In case the temperature of the cold air measured by temperature sensor 14a and/or the temperature in the load space 2 do not meet the requirements baffles 9a, 10a, port 8a as well as the ratio of air flow 5 to air flow 8 are adjusted.

As the cold air moves down the duct 7 the air warms up by heat input from goods in the load space 2 and from the environment. The air entering the load space 2 through ports 8b and 8c has a temperature between -8 °C and + 2°C. Thus, in the middle portion of the load space 2, that is in the middle portion of container 1, chilled food products are stored. The set temperature in this middle portion of the load space 2 is chosen depending on the requirements of the food products. The temperature is controlled in the same manner as described above with respect to the temperature control in the front portion of the load space 2.

At the downstream end of duct 7 the air has lost most of its cold. Therefore, in the end portion of the load space 2 the fresh fruits and vegetables would be stored. If the temperature of the air leaving the duct 7 through port 8d is still too low additional warm air is provided by heater 12 such that air with the desired temperature, for example between 3°C and 8 °C, enters load space 2 through port 8d.

## Claims

1. Transport vehicle comprising a container (1) including a load space (2) for goods, a cryogen tank (4) for storing a cryogenic fluid, a heat exchanger (3), wherein said heat exchanger (3) is in communication with said cryogen tank (4) and with said load space (2), **characterized in that** said container (1) comprises a duct (7) extending over at least half of the length of said container (1) and wherein said heat exchanger (3) is in communication with said duct (7).

2. Vehicle according to claim 1 wherein said duct (7) extends over at least 70%, preferably at least 80%, more preferably at least 90% of the length of said container (1).

3. Vehicle according to claim 1 or 2 wherein said heat exchanger (3) is positioned inside said container (1).

4. Vehicle according to any of claims 1 to 3 wherein said duct (7) comprises ports (8a, 8b, 8c, 8d) towards said load space (2).

5. Vehicle according to claim 4 wherein said ports (8a, 8b, 8c, 8d) are adjustable.

6. Vehicle according to any of claims 1 to 5 wherein said duct comprises baffles (9a, 9b, 9c, 9d, 10a, 10b, 10c), preferably adjustable baffles.

7. Vehicle according to any of claims 1 to 6 wherein said duct (7) comprises at least one shutter (11) for closing a part of said duct (7).

8. Vehicle according to any of claims 1 to 7 wherein a heater (12) is provided in communication with said duct (7).

9. Vehicle according to any of claims 1 to 8 wherein a fan (13) is provided in communication with said duct (7).

10. Vehicle according to any of claims 1 to 9 wherein at least one of said ports (8a, 8b, 8c, 8d) is provided with a fan.

11. Vehicle according to any of claims 1 to 10 wherein said duct (7) and / or said load space (2) is provided with temperature sensors (14a, 14b, 14c, 14d, 14e).

12. Vehicle according to any of claims 1 to 11 comprising an articulated trailer comprising said container (1).
